Europäisches Patentamt

European Patent Office

Office européen des brevets

(19)

(11) Numéro de publication: **0 527 882 B1**

(12) **FASCICULE DE BREVET EUROPEEN**

(45) Date de publication du fascicule du brevet: **02.11.95**   (51) Int. Cl.⁶: **C25C 7/00**, C25C 1/20

(21) Numéro de dépôt: **91909531.5**

(22) Date de dépôt: **02.05.91**

(86) Numéro de dépôt internationale :
**PCT/FR91/00361**

(87) Numéro de publication internationale :
**WO 91/17287 (14.11.91 91/26)**

Le dossier contient des informations techniques
présentées postérieurement au dépôt de la
demande et ne figurant pas dans le présent
fascicule.

(54) **DISPOSITIF ET PROCEDE D'ELECTROLYSE A ELECTRODE POREUSE.**

(30) Priorité: **07.05.90 FR 9005962**

(43) Date de publication de la demande:
**24.02.93 Bulletin 93/08**

(45) Mention de la délivrance du brevet:
**02.11.95 Bulletin 95/44**

(84) Etats contractants désignés:
**DE FR GB**

(56) Documents cités:
**EP-A- 0 037 325**
**US-A- 4 202 752**

(73) Titulaire: **KODAK-PATHE**
**26, rue Villiot**
**F-75594 Paris Cedex 12 (FR)**
(84) Etats contractants désignés:
**FR**

(73) Titulaire: **EASTMAN KODAK COMPANY**
**343 State Street**
**Rochester,**
**New York 14650-2201 (US)**
(84) Etats contractants désignés:
**DE GB**

(72) Inventeur: **BERTORELLI, Claude, Richard, Victor Kodak-Pathé**
**Zone Industrielle**
**F-71102 Chalon-sur-Saône Cédex (FR)**
Inventeur: **LACOSTE, Germain, Marcel, René**
**22, chemin S.-Pierre**
**F-31170 Tournefeuille (FR)**

Hydrometallurgy - Research, Development and Plant Practice. Proceedings of the 3rd international symposium on hydrometallurgy held at the 112th AIME annual meeting, Atlanta, Georgia, 6-10 mars 1983, The Metallurgical Society of AIME, R.L. PAUL et al.: "The recovery of gold from concentrated aurocyanide solutions", pages 689-804, voir page 691, ligne 43 - page 693, ligne 22

(74) Mandataire: **Buff, Michel**
**Kodak-Pathé**
**Département des Brevets et Licences CRT**
**Centre de Recherches et de Technologie**
**Zone Industrielle**
**F-71102 Chalon sur Saône Cédex (FR)**

## Description

La présente invention concerne un dispositif et un procédé d'électrolyse par percolation à travers une ou plusieurs électrodes poreuses et leur application à une réaction électrochimique, notamment en vue de la récupération de métaux à partir de solutions ioniques diluées.

Il est connu de réaliser des réactions électrochimiques aved des dispositifs d'électrolyse dont au moins d'une des électrodes est constituée d'un lit de particules conductrices de l'électricité, polarisées comme cathode ou comme anode, selon le type de réaction envisagée. Ces électrodes désignées sous le nom d'électrodes poreuses, ou volumiques, permettent donc, à cause de leurs surfaces spécifiques élevées, de traiter des solutions ioniques diluées pour lesquelles la densité de courant d'électrolyse est faible. Le brevet US 4 202 752 décrit une cellule d'electrolyse constituée d'une pluralité de chambres cathodiques et anodiques annulaires et concentriques.

Le brevet européen n° 37 325 décrit un tel dispositif dont le rendement est amélioré en associant l'électrode poreuse à plusieurs contre-électrodes. Un mode de réalisation particulièrement intéressant de ce type d'électrode consiste à disposer les contre-électrodes par rapport à l'électrode poreuse, de façon à ce que le champ électrique engendré soit radial, c'est-à-dire perpendiculaire ou à peu près perpendiculaire à la direction d'écoulement de l'électrolyte. De tels dispositifs sont par exemple représentés aux figures 5 et 6 du brevet européen précité dans lequel ils font par ailleurs l'objet d'une description détaillée.

Ces dispositifs permettent la mise en oeuvre de réactions électrochimiques. Dans le cas où cette réaction électrochimique est une réduction cathodique, par exemple en vue de la récupération de métaux, l'électrode poreuse, sous forme d'un lit de particules, est utilisée comme cathode.

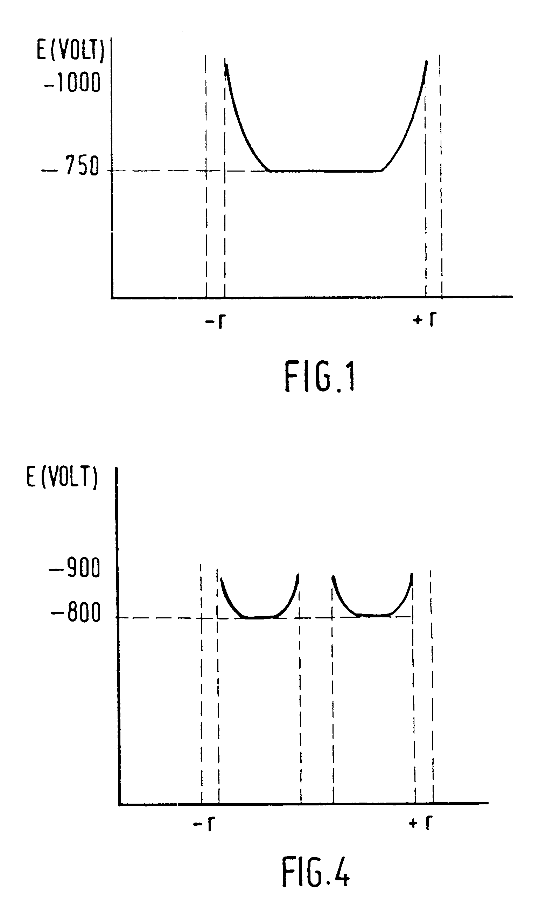

Dans une cellule à électrode cathodique poreuse à champ radial avec contre-électrodes anodiques annulaires périphériques, la variation du potentiel d'électrode E défini par la valeur locale de la différence de potentiel métal-solution dans le lit de particules de l'électrode poreuse en fonction du rayon r de l'électrode est représentée à la figure 1. On constate que le potentiel varie rapidement en devenant de moins en moins cathodique à partir des contre-électrodes et atteint une valeur d'équilibre dans la partie centrale, la plus éloignée des contres-électrodes. Ceci signifie que non seulement la partie centrale du lit de particules ne travaille pas, mais qu'en outre la solution qui se trouve en contact avec cette partie du lit peut être le siège de réactions électrochimiques indésirables. Par exemple, dans le cas où le dispositif est utilisé pour récupérer de l'argent à partir de solution de fixateur photographique contenant des ions bisulfite ($HSO_3^-$), et de quelques mg à environ 10 g d'argent par titre, le potentiel mesuré en utilisant comme électrode de référence une électrode à sulfate de mercure et de sodium saturée, varie de - 1000 à - 750 mV. A cause de cette variation, on risque de reduire les ions bisulfite en sulfure. Une telle reaction parasite, lorsqu'elle intervient, perturbe la réduction cathodique des ions argent, par suite d'une sulfuration indésirable des particules du lit. Il est donc souhaitable de remédier à ces inconvénients et d'obtenir une meilleure utilisation du lit de particules de l'électrode poreuse.

La présente invention a en conséquence pour objet une cellule d'électrolyse à électrode poreuse et à champ radial permettant de remédier aux inconvénients précités.

La cellule d'éléctrolyse selon l'invention comprend :
- une électrode constituée par un lit de particules conductrices de l'électricité et affectée d'une première polarité,
- une pluralité de contre-électrodes, affectées d'une deuxième polarité,

cette cellule est caractérisée en ce qu'elle comprend en outre au moins une contre-électrode supplémentaire, disposée au centre du lit de particules si la pluralité de contre-électrodes est à la périphérie du lit, ou à la périphérie du lit de particules, si la pluralité de contre-électrodes est disposée au centre du lit, et ceci de sorte que le champ électrique engendré soit radial et sensiblement perpendiculaire à la direction d'écoulement de l'électrolyte dans le lit de particules.

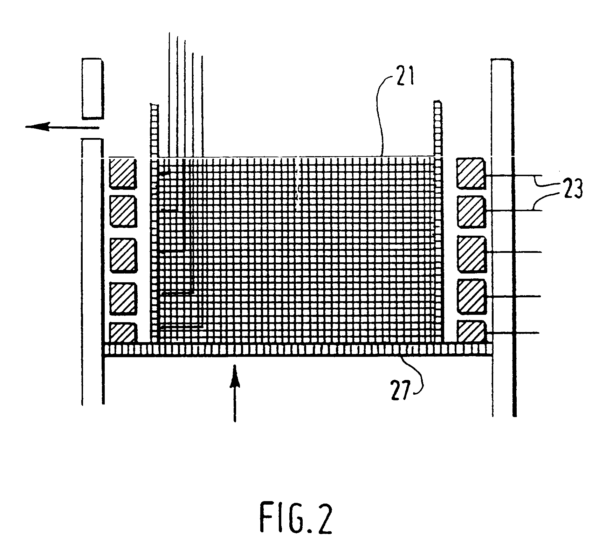

La figure 2 représente un vue en coupe d'une cellule d'électrolyse à champ radial selon le brevet européen 37 325, avec une cathode poreuse centrale 21 (lit de particules conductrices) et une pluralité de contre-électrodes (anodes) périphériques 23. Dans une telle électrode, le profil du potentiel est celui représenté à la figure 1, avec les inconvénients mentionnés ci-dessus.

La figure 3 représente une vue en coupe d'une cellule d'électrolyse analogue à celle de la figure 2, excepté qu'elle est modifiée, conformément à la présente invention, de façon à comprendre une contre-électrode supplémentaire (anode) disposée au centre du lit de particules conductrices.

La figure 4 représente la variation du potentiel de la solution dans le lit de particules de la cathode poreuse d'une cellule selon l'invention telle que représentée à la figure 3.

La figure 5 représente la variation de la teneur résiduelle en argent et en bisulfite d'une cellule selon l'invention, en fonction du temps.

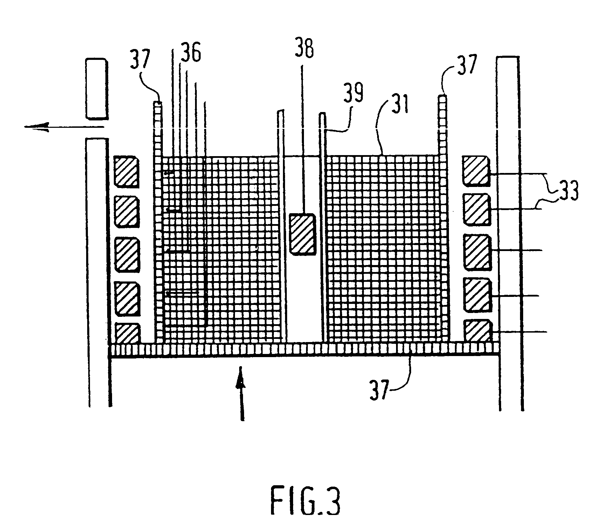

Selon un mode de réalisation représenté à la figure 3, la cellule d'électrolyse selon l'invention comprend :

1) une électrode poreuse 31, polarisée de façon à jouer le rôle de cathode et constituée d'un lit de particules conductrices ;

2) Un pluralité de contre-électrodes externes 33, polarisées de façon à jouer le rôle d'anodes et distribuées sur la périphérie du lit de particules et

3) Une ou plusieurs contre-électrodes supplémentaires internes 38, disposées au centre du lit de particules, par exemple colinéaire avec l'axe de ce lit, lorsque le lit est de forme cylindrique ou prismatique. Ces contre-électrodes sont séparées du lit de particules par un organe 39 tel qu'un poreux analogue au séparateur 37.

Les électrodes poreuses utilisées selon l'invention sont en général constituées de particules ou de granulés, de forme et de dimensions variables, selon la réaction électrochimique envisagée. Lorsqu'on désire procéder à la récupération d'un métal par réduction cathodique, il est avantageux d'utiliser des billes de verre revêtues d'un dépôt métallique ou des billes de métal. On peut aussi utiliser des particules de carbone. Le diamètre des particules est choisi en fonction des dimensions de la cellule. Lorsqu'on fait travailler la cellule d'électrolyse en lit fixe, c'est-à-dire avec une vitesse de percolation faible, il est préférable de choisir des particules de diamétre suffisamment important, par exemple, compris entre 0,5 mm et 5 mm, de façon à éviter le colmatage trop rapide du lit.

Les contre-électrodes sont réalisées de façon classique. Dans le cas d'une utilisation du lit de particules comme cathode, les contre-électrodes jouent le rôle d'anodes. Elles sont réalisées en graphite, ou bien en métal. On peut par exemple utiliser des barreaux ou des cylindres de graphite, des grilles métalliques ou des fils platinés, selon le type de cellule.

D'une manière générale, les électrodes sont séparées des contre-électrodes, en utilisant une membrane permettant le passage des ions, par exemple en alumine poreuse, ou en maitère plastique poreuse ; la membrane est constituée d'une manière inerte du point de vue des réactions électrochimiques en jeu dans la cellule. La perméabilité de cette membrane peut être sélective pour certains ions. La contre-électrode supplémentaire est avantageusement disposée dans un compartiment particulier, isolé lui aussi du lit de particules par une membrane à perméabilité sélective, ou simplement par un séparateur physique pour éviter les courts-circuits entre anode et cathode.

La régulation des potentiels d'électrodes aux extrémités du lit de particules peut être réalisée d'une façon connue au moyen d'un potentiostat. Le potentiostat fournit une tension continue aux bornes de la cellule et il maintient constante la tension entre deux points de la cellule, par exemple, entre une électrode de référence et un point du lit de particules voisin de l'électrode de référence. Un potentiel de "consigne", choisi sur la couche intensité-potentiel de la réaction électrochimique envisagée, est affiché sur le potentiostat et comparé en permanence au potentiel-solution dans le lit de particules tel qu'il est mesuré par l'électrode de référence. En fonction de l'écart enregistré entre ce potentiel et le potentiel de consigne, le régulateur du potentiostat provoque une variation du potentiel d'anode qui tend à annuler cet écart. Les perturbations ainsi compensées peuvent provenir de variations de concentrations, de vitesse d'écoulement, de température, etc.

Selon un mode de réalisation, l'électrolyte qui circule à travers l'électrode poreuse est soumis à une pulsation, de sorte que les particules du lit constituant cette électrode sont mises en état de fluidisation pendant une fraction de chaque cycle de pulsation. Ce procédé de pulsation est décrit dans la demande de brevet français n° 8608331, déposée le 6 juin 1986 au nom de l'Institut Polytechnique de Toulouse. publiée sou le n° 2 599 758

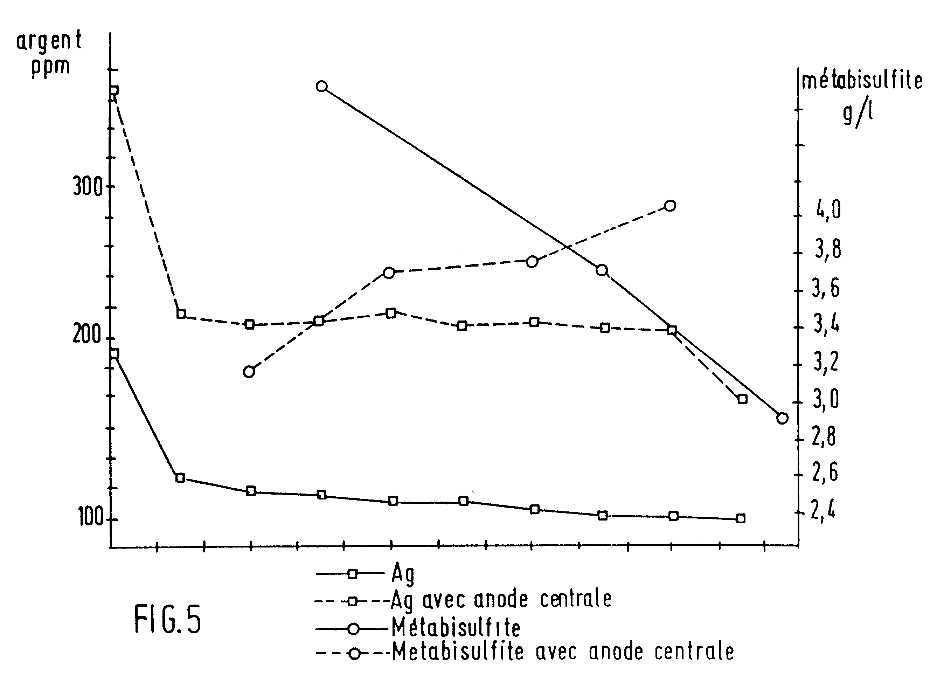

Les profils de potentiel représentés aux figures 1 et 4 montrent à quels résultats avantageux conduit l'utilisation d'une contre-électrode supplémentaire selon l'invention. Comme celui de la figure 1, le profil de la figure 4 correspond à l'utilisation de la cellule pour effectuer le réduction cathodique d'une solution de fixateur photographique comprenant des ions argent et bisulfite. Avec la cellule selon l'invention, comprenant une cathode poreuse et deux compartiments anodiques le potentiel d'électrode varie seulement de - 900 à - 800 mV ce qui permet d'éviter des réactions électrochimiques indésirables, et d'augmenter la partie "utile" du lit, et contribue à l'obtention de dépôts métalliques à profil plus homogéne dans le lit de particules.

En évitant notamment, grâce à la structure selon l'invention, la réduction indésirable du bisulfite, on diminue la consommation en sulfite lors de l'électrolyse, tout en maintenant la capacité de désargentation de la cellule d'électrolyse.

## EXEMPLE

On réalise une cellule électrochimique à champ radial telle que représentée à la figure 3 ; le lit annulaire 31 est constitué de particules de carbone servant de cathode ; Les particules de carbone ont un diamètre de 0,5 cm et ont été soumises à une pré-argenture. Le volume du lit de particules est de 10 l. La cellule comprend aussi neuf anodes distinctes 33. Le corps de la cellule est constitué d'un cylindre en polyméthacrylate de méthyle transparent Altuglas 60®, d'une hauteur de 60 cm et d'un diamètre de 17 cm.

Les anodes 33 sont constituées de grilles d'acier inox ; chaque anode a 2,8 cm de largeur et est séparée de l'anode suivante par une distance de 2,0 cm. La cellule comprend, en regard de chaque anode, une électrode de référence 36 (électrode à sulfate de mercure et de sodium saturée). L'anode supplémentaire 38 est constituée d'une tige d'acier inox. Les compartiments anodiques des anodes 33 et 38 sont séparés de la cathode poreuse 31 par des membranes 37 et 39 de polyéthylène poreuses (commercialisées par la Société VION).

On utilise cette cellule à champ radial pour électrolyser une solution contenant 6 g d'argent par litre, en présence de bisulfite (11 g/l).

Les anodes sont raccordées à une même source de potentiel. L'alimentation de la cellule est faite au moyen d'un courant dont le potentiel peut varier entre 0 et 20 volts et l'intensité entre 0 et 20 A. L'alimentation en argent de cette solution est réalisée avec des rajoûts de 40 g d'argent par heure (sous forme de bromure), simulant l'introduction dans un fixateur de produits photographiques développés.

Pour une intensité de 18 A, les courbes donnant les variations des concentrations respectives d'argent et de sulfite en fonction du temps sont données à la figure 5, à la fois pour la cellule selon l'invention, et pour une cellule identique, mais ne comprenant pas d'anode supplémentaire (pas d'anode centrale dans ce cas).

On constate qu'avec l'anode supplémentaire centrale, la concentration résiduelle en argent diminue pour se stabiliser à une valeur résiduelle à peu près constante. Mais en outre, la concentration en sulfite est maintenue avec l'anode supplémentaire, alors que cette concentration s'effondre en l'absence de l'anode supplémentaire.

## Revendications

1. Cellule d'électrolyse pour le traitement d'une solution par percolation en vue d'une réaction électrochimique, la cellule étant constituée (a) d'une chambre d'électrolyse ayant une première polarité constituée d'un lit de particules fluidisable qui forme l'électrode poreuse (31), (b) une première contre-électrode (33) affectée d'une deuxième polarité située soit à la périphérie du lit de particules soit à l'intérieur du lit de particules, et (c) au moins une contre-électrode supplémentaire (38) ayant la même polarité que la première contre-électrode, la contre-électrode supplémentaire étant située soit à l'intérieur du lit de particules si la première contre-électrode est située à la périphérie du lit de particules soit à la périphérie du lit de particules si la première contre-électrode est située à l'intérieur du lit de particules, les contre-électrodes étant telles que la cellule d'électrolyse comprend une seule chambre d'électrolyse.

2. Cellule d'électrolyse selon la revendication 1 dans laquelle la première contre-électrode (33) est constituée d'une pluralité de contre-électrodes superposées.

3. Cellule d'électrolyse selon la revendication 1 dans laquelle l'électrode poreuse (31) est séparée des contre-électrodes par une paroi perméable aux ions, mais non perméable aux solutions.

4. Cellule d'électrolyse selon la revendication 1 dans laquelle l'électrode poreuse (31) est constituée d'un lit de particules pré-argentées.

5. Cellule d'électrolyse selon la revendication 1 dans laquelle l'électrolyte qui circule à travers l'électrode poreuse (31) est soumis à une pulsation, de sorte que les particules du lit constituant l'électrode poreuse sont mises en état de fluidisation pendant une fraction de chaque cycle de pulsation.

6. Utilisation d'une cellule d'électrolyse selon l'une quelconque des revendications 1 à 5 pour le traitement d'effluents photographiques aqueux en vue d'y récupérer l'argent, caractérisé en ce qu'on polarise cathodiquement l'électrode poreuse (31), on polarise anodiquement les contre-électrodes (33, 38), et on fait circuler dans la cellule un effluent photographique contenant des ions argent de façon à provoquer la réduction des ions argent et le dépôt de l'argent métallique sur les particules du lit.

## Claims

1. Electrolytic cell for percolating a solution in order to perform an electrochemical reaction, comprising
    (a) an electrolysis chamber having a first polarity consisting of a bed of electro-conductive, fluidizable particles and forming a porous electrodes (31),
    (b) a first counter-electrode (33) having a second polarity either located at the periphery of the particle bed or located inside the particle bed, and
    (c) at least one additional counter-electrode (38) having the same polarity as the first counter-electrode, the additional counter-electrode being either located inside the particle bed when the first counter-electrode is located at the periphery of the particle bed, or at the periphery of the particle bed when the first counter-electrode is located inside the particulate bed.

2. Electrolytic cell according to Claim 1 wherein the first counter-electrode (33) consists in a plurality of superposed counter-electrodes.

3. Electrolytic cell according to Claim 1 wherein the porous electrode (31) is separated from the counter-electrodes by a porous wall ion permeable but not solution permeable.

4. Electrolytic cell according to Claim 1 wherein the porous electrode (31) consists in a bed of particles initially silver coated.

5. Electrolytic cell according to Claim 1 wherein the electrolyte circulating through the porous electrode (31) is subjected to pulsation so that the particles of the porous electrode are fluidized during a fraction of each pulsation cycle.

6. Use of the electrolytic cell of claims 1 to 5, for the treatment of aqueous photographic wastes in order to recover silver contained therein, characterized in that the bed of particles (31) is cathodically biased, the counter-electrodes (33, 38) are anodically biased, and a silver ion containing aqueous photographic waste is circulated in said cell, while simultaneously an electrical and the cathode, in such a way that the silver ions are reduced and metal silver is deposited onto the particles of the bed.

**Patentansprüche**

1. Elektrolytische Zelle zum Perkolieren einer Lösung, um eine elektrochemische Reaktion durchzuführen, mit

(a) einer Elektrolysekammer mit einer ersten Polarität, bestehend aus einem Bett aus Elektro-leitfähigen, fluidisierbaren Teilchen unter Bildung einer porösen Elektrode (31),

(b) einer ersten Gegenelektrode (33) mit einer zweiten Polarität, die entweder an der Peripherie des Teilchenbettes angeordnet ist oder innerhalb des Teilchenbettes, und

(c) mindestens einer zusätzlichen Gegenelektrode (38) mit der gleichen Polarität wie die erste Gegenelektrode, wobei die zusätzliche Gegenelektrode entweder innerhalb des Teilchenbettes angeordnet ist, wenn die erste Gegenelektrode an der Peripherie des Teilchenbettes angeordnet ist, oder an der Peripherie des Teilchenbettes, wenn die erste Gegenelektrode innerhalb des Teilchenbettes angeordnet ist.

2. Elektrolytische Zelle nach Anspruch 1, in der die erste Gegenelektrode (33) aus einer Vielzahl von übereinander angeordneten Gegenelektroden besteht.

3. Elektrolytische Zelle nach Anspruch 1, in der die poröse Elektrode (31) von den Gegenelektroden durch eine poröse Wand getrennt ist, die für Ionen permeabel ist, jedoch nicht für eine Lösung.

4. Elektrolytische Zelle nach Anspruch 1, in der die poröse Elektrode (31) aus einem Bett von Teilchen besteht, die ursprünglich mit Silber beschichtet sind.

5. Elektrolytische Zelle nach Anspruch 1, in der der Elektrolyt, der durch die poröse Elektrode (31) zirkuliert, Schwingungen unterworfen wird, so daß die Teilchen der porösen Elektrode während eines Teiles eines jeden Schwingungszyklus fluidisiert werden.

6. Verwendung der elektrolytischen Zelle nach Ansprüchen 1 bis 5 für die Behandlung von wäßrigen photographischen Abfallprodukten, um hierin enthaltenes Silber wiederzugewinnen, dadurch gekennzeichnet, daß das Bett der Teilchen (31) kathodisch vorgespannt ist, daß die Gegenelektroden (33, 38) anodisch vorgespannt sind, und daß ein Silberionen enthaltendes photographisches Abwasser in der Zelle zirkuliert wird, derart, daß die Silberionen reduziert werden und metallisches Silber auf den Teilchen des Bettes abgeschieden wird.

FIG.1

FIG.4

FIG.2

FIG.3

FIG.5

Ag
Ag avec anode centrale
Métabisulfite
Metabisulfite avec anode centrale

EP 0 527 882 B1